# EUROPEAN PATENT APPLICATION

(11) **EP 4 443 400 A1**
(43) Date of publication of application: **09.10.2024**
(21) Application number: 23166637.1
(22) Date of filing: 04.04.2023
(51) Int. Cl.: G07C 9/00, H02J 7/35

(54) **ENERGY HARVESTING BASED ACCESS CONTROL METHOD BASED ON ACCESS ENFORCEMENT POINT(S)**

(71) Applicant: dormakaba Schweiz AG, 8623 Wetzikon (CH)
(72) Inventor: Duetschler, Urs, CH 8623 Kempten, Wetzikon (CH)
(74) Representative: Balder IP Law, S.L.

(57) **Abstract**

According to a first aspect of the present invention, a computer-implemented energy harvesting based access control method is provided. The method comprises instruction-polling, by an access enforcement point. Instruction-polling includes repeatedly sending an instruction request by the access enforcement point according to a polling time interval, and receiving, by the access enforcement point, an instruction. The instruction includes an unlock-command to cause unlocking an access point. The access enforcement point is configured to cause operation of the access point according to the instruction. The access enforcement point comprises energy harvesting means including a solar cell and an energy storage. The method further comprises: adjusting the polling time interval based on a status of the energy harvesting means.

## Description

### FIELD OF THE INVENTION

The present invention relates to an energy harvesting based access control method and system, in particular to an energy-efficient access control method and system based on access enforcement points and energy harvesting means. Further, the present invention relates to using an access enforcement point in an access control method. Further, the present invention relates to a corresponding computer program.

### BACKGROUND OF THE INVENTION

Entry systems have become widely used in applications in particular for access control in building facilities. Access control relates to granting, denying or limiting access to particular section(s) of a controlled area, usually by means of some level of access control by use of a barrier, such as a door, turnstile, parking gate, elevator door, or other barrier.

Various prior art systems are known for access control based on various principles using corresponding technologies. According to a first known approach, referred to as "who you are", access control is aimed to be achieved by identifying the individuals themselves, implemented using biometric identification technologies. One particular biometric identification technology used for people flow control uses face recognition to identify individuals. While face recognition technology has its merits, it is prone to error and is therefore often unreliable. Furthermore, face recognition technology has proven to be greatly affected by face covering, being for cultural and/or hygienic reasons. Further, face recognition is based on at least one camera which is always active which is not energy efficient. Alternative particular biometric identification technology used for access flow control uses fingerprint to identify individuals. Such is however disadvantageous as fingerprint recognition is often unreliable (slow, affected by the dryness of one's skin) and is particularly disadvantageous as it requires contact with a frequently used surface (the fingerprint reader).

According to a further known approach, referred to as "what you have", access control is based on identifying individuals using something the user possesses, referred to as a token or authentication medium. Particularly advantageous are keyless entry systems due to their convenience and/or reliability. Keyless entry systems may for example operate in that an BLE (Bluetooth Low Energy) or UWB (Ultra-Wideband) access control terminal executes a wireless communication with an authentication device, such as a keyless fob, a keycard or an authentication medium incorporating a corresponding wireless transceiver. Once said wireless communication between the access control terminal and the authentication medium has been executed, the access control terminal exchanges data messages with the authentication medium. The authentication can be initiated either by a user, for instance by pressing a button on the authentication medium to trigger transmission of authentication data to the access control terminal. Upon successful authentication, i.e. verification of user credentials (e.g. by correlating authentication data received from the authentication device with a list of authorized users), the access control terminal grants access to the user in possession of the respective authentication medium, e.g. by opening said barrier. On the other hand, if the authentication fails, the access control terminal denies access to the user in possession of the respective authentication medium, e.g. by locking the barrier/ by keeping the barrier locked.

For close-range applications, a radio-frequency identification (RFID) transponder (or tag) is often used, which has mostly replaced earlier magnetic stripe cards. Other current solutions use infra-red systems or radio systems to transmit an authenticating signal from an authentication medium to an access control terminal of a security control system. Close proximity keyless systems, (i.e. between direct contact and a threshold of a few centimeters), for example RFID based systems, allow determination of a user's proximity to a barrier by appropriate placement of a reader of the access control terminal. However, as their name implies close-proximity keyless systems suffer from the disadvantage that they require a very close proximity of the authentication medium to the access control terminal. In order to overcome this disadvantage, mid-range keyless entry systems have been proposed, in particular based on BLE and/or UWB communication. UWB systems are advantageous since they allow reliable mid-range communication without a user having to precisely identify the reader device. As the communicating range between an authentication device and an UWB access control terminal increases, the convenience and ease-of-use increases, because the authentication medium does not need to be placed in very close range, such as less than one centimeter from the UWB access control terminal. The user no longer needing to precisely locate the UWB access control terminal (or its antenna) not only adds convenience but also has the potential to speed up the process, thereby increasing the throughput through a barrier.

The network topologies of said access control systems typically comprise a central access rights server to which each access control terminal is connected. An authentication medium held by a user is brought close to an access control terminal for wireless exchange of credentials. These credentials are then transmitted from the access control terminal to the server, which performs a look-up in a database of access rights. If access is granted, the server sends a signal to the access control terminal, which allows the user access through an electronically controlled doorway. The disadvantage of this topology is that it requires each access control terminal to be permanently connected to the server, which is associated with considerable cost in wiring and presents a single point of failure. More modern access control systems have relegated access control decisions to the access control terminals themselves. If these access control terminals are not connected to the server, however, the issue then arises of how and when to update the database of access rights in each access control terminal.

Other access rights systems invert the situation by storing a database or table of the user's access rights in the mediums themselves. At an access control point, the access control terminals and the authentication medium exchange data containing an identifier of the access control terminal and the user's access rights at that access control point. Authentication mediums are however vulnerable entities with respect to date protection. Further, updating access rights becomes cumbersome as every affected party must have its authentication medium updated with new access rights.

Other solutions relate to access enforcement points that are configured to operate an access point, e.g. unlocking a door, and that constantly communicate with another device. Such access enforcement points may operate by a battery that has to be exchanged from time to time. Considering that an access enforcement point that constantly communicates with another device and/or searches for another device constantly consumes considerable amounts of energy, such a solution is not necessarily energy-efficient and further requires maintenance.

The article "Recognizing Hand Gestures using Solar Cells" by Dong Ma et al., IEEE Transactions on Mobile Computing, doi: 10.1109/TMC.2022.3148143 discloses a system which can recognize hand gestures near a solar-powered device by analyzing the patterns of the photocurrent.

None of the known concepts provide an energy-efficient and at the same time easy-to-use solution. Therefore, there is a need for such solution.

### SUMMARY OF THE INVENTION

It is an object of the present invention is to provide an access control method and system which at least partially overcomes the above-mentioned disadvantages. In particular, it is an object of the present invention to provide an energy harvesting based access control method and system which is energy-efficient and intuitive to use.

According to the present invention, the above-mentioned objects are addressed through the features of the independent claims. In addition, further advantageous embodiments follow from the dependent claims and the description.

According to a first aspect of the present invention, a computer-implemented energy harvesting based access control method is provided. The method may comprise instruction-polling, by an access enforcement point. Instruction-polling may include repeatedly sending, by the access enforcement point, an instruction request according to a polling time interval. The method may comprise receiving, by the access enforcement point, an instruction. The instruction may include an unlock-command to cause unlocking of an access point. The access enforcement point may be configured to cause operation, preferably unlocking and/or locking, of the access point according to the instruction. The access enforcement point may comprise energy harvesting means that may include a solar cell and an energy storage. The method may further comprise adjusting the polling time interval based on/depending on a status of the energy harvesting means.

The method allows adjusting the polling time interval based on a status of the energy harvesting means. This may allow to prevent the access enforcement point from running out of energy and/or may reduce the risk for the access enforcement point to run out of energy. An access enforcement that is configured to perform the above energy harvesting based access method essentially only needs maintenance in case it is damaged or in case it runs out of energy. The method may allow to reduce the need of maintenance.

The method may allow to maximize the frequency of instruction-polling without increasing the risk of the access enforcement point running out of energy. The method may allow to maximize the frequency of instruction-polling while not significantly increasing the risk of the access enforcement point running out of energy. Maximizing the frequency of instruction-polling may be advantageous as it may allow to minimize the time a user has to wait in order to operate an access point, i.e. it may reduce the latency between an intention of a user to operate an access point and the user actually operating the access point. Thus, the method may allow to maximize the performance of an access enforcement point/to provide the best possible performance of an access enforcement point.

The method may allow to use the energy harvesting means most efficiently. In this way, the method may allow to achieve a better or similar performance, e.g. even with "smaller" energy harvesting means. Thus, the method may allow to use "smaller" energy harvesting means, e.g. a smaller solar cell/a solar cell that is configured to generate less energy, and/or a smaller energy storage, i.e. an energy storage that has a smaller storage capacity. In this way, the method may allow for more cost/resource-efficient energy-harvesting means and access enforcement points comprising those energy-harvesting means.

The term access enforcement point may include any device that is capable of unlocking and/or locking an access point. In particular, the access enforcement point may not have decision taking capabilities for deciding whether to unlock or not based on the validity of a credential. Rather, the access enforcement point may be capable of performing or causing unlocking and/or locking a respective access point upon receiving a respective command. Each access enforcement point may be associated to/may have an access point. Each access point may be associated to/may have an access enforcement point. For example, the access enforcement point may include an actuator for unlocking and/or locking the access point. Thus, in other words, the access enforcement point may be understood as a stupid device which may only execute commands without taking any decision, e.g., on whether a user has an intent to unlock or whether the user is allowed to access a respective access point. Further, the access enforcement point may be capable of low-power wireless communication in order to receive said commands, in particular from one or more access decision points and/or from an authentication medium. Due to this configuration of the access enforcement point, the access enforcement point may be operated with a very low energy consumption. This is beneficial because the need for maintenance is significantly reduced. In other words: An access enforcement point essentially only needs maintenance in case if it is damaged or in case if it runs out of energy. The access enforcement point may not be connected to a power grid in order to keep the installation effort low.

The access enforcement point may be a low-power access enforcement point.

It may be provided that an access enforcement point causes unlocking of an associated access point e.g. upon receiving an unlock-command from an access decision point. The access enforcement point may therefore include means for performing/causing unlocking, e.g., a lock. The access enforcement point may be configured to cause operation of the access point, in particular unlocking and/or locking of the access point.

It may be provided that the access enforcement point and/or the access point include signaling means, in particular a visual signaling means and/or an acoustic signaling means, e.g. for indicating a status and/or an operation of the access enforcement point and/or the access point, e.g. locked/unlocked.

The method may comprise storing energy, e.g. electrical energy, generated by the solar cell, in the energy storage. The energy harvesting means and/or the energy storage may be adapted to provide an amount of energy to the access enforcement point that is sufficient to operate the access enforcement point. I.e., the energy harvesting means and/or the energy storage may be adapted to power the access enforcement point. The access enforcement point may not be electrically connected to a power-grid. The access enforcement point be electrically independent from a power-grid. The solar cell may be configured to charge the energy storage, i.e. to transfer energy into the energy storage. The energy storage may be configured to power the access enforcement point in the absence of a solar cell signal, e.g. in the dark.

The solar cell signal may be a time dependent signal. The solar cell signal may be a photocurrent and/or a photocurrent density, e.g. generated by the solar cell. The solar cell signal may be a current and/or a current density, e.g. generated by the solar cell. The solar cell signal may be a voltage, e.g. a voltage output by the solar cell. The solar cell signal may be filtered and/or averaged, e.g. averaged for a predetermined amount of time using a moving average. The solar cell signal may be amplified, e.g. by the access enforcement point.

The solar cell may be an indoor solar cell. The area of the light-receiving surface of the solar cell may be less than 100 cm^2, or less than 50 cm^2. The area of the light-receiving surface of the solar cell may be smaller than the average palm of a human hand. The area of the light-receiving surface of the solar cell may be smaller than the average area of a physical keycard.

Sending an instruction request and/or instruction-polling, by the access enforcement point, may comprise broadcasting and/or multicasting. The access enforcement point may send the instruction request to multiple access decision points and/or may be configured to send the instruction request to multiple access decision points. Sending an instruction request and/or instruction-polling may be done in a broadcasting manner. The instruction request may be a broadcasting signal.

In some embodiments, one or more of the receivers of the instruction request, e.g. one or more access decision points, do not necessarily need to respond to the instruction request.

The method may comprise receiving, by the access enforcement point and e.g. in response to instruction-polling/sending the instruction request, an instruction.

The step of instruction-polling including repeatedly sending an instruction request by the low power access enforcement points may be understood as a signal which, literally speaking, carries the message "does anyone have a command for me?". Any receiver of this instruction request may respond accordingly, e.g. with an unlock-command or a no-action command.

The instruction may include an operation-command, e.g. an unlocking-command and/or a locking-locking command, to cause operation, e.g. unlocking and/or locking, of an access point.

The method may comprise setting the polling time interval based/depending on a status of the energy harvesting means. The polling time may be set during an initial operation phase of the access enforcement point and e.g. may be adjusted later on.

The polling time interval may be dynamically adjusted based/depending on the status of the energy harvesting means. The polling time interval may be dynamically adjusted in discrete steps depending on the status of the energy harvesting means, i.e. there may be several discrete polling time intervals that may be dynamically set based on the status of the energy harvesting means. The polling time interval may be dynamically adjusted continuously depending on the status of the energy harvesting means. The polling time interval may be dynamically adjusted such that a level of energy stored in the energy storage is kept within a predetermined range.

The polling time interval may be continuously adjusted based/depending on the status of the energy harvesting means.

The method may further comprise: Determining a status of the energy harvesting means, e.g. by the access enforcement point.

The status of the energy harvesting means e.g. may be/comprise a level of energy stored in the energy storage and/or a solar cell signal and/or a battery status of the energy harvesting means. A solar cell signal may be and/or may comprise a voltage, e.g. output by the solar cell, and/or a current, e.g. generated by the solar cell, and/or a current density, e.g. generated by the solar cell. The solar cell signal e.g. may be a photocurrent and/or a photocurrent density. The status of the energy harvesting means e.g. may be/comprise a level of energy stored in the energy storage.

The method may comprise: Causing, by the access enforcement point, operation of the access point according to the received instruction.

It may be provided that the access point is a postbox and/or a parcel box and/or a door and/or a lockable piece of furniture and/or an access restricted trigger mechanism. An access restricted trigger mechanism may be provided at an elevator, wherein unlocking the access restricted trigger mechanism causes the elevator to perform a predetermined action, e.g., moving to a specific floor or locking the elevator while keeping the elevator door open.

The method may further comprise: Determining a status of the energy harvesting means, e.g. by the access enforcement point.

The method may comprise, e.g. upon sending the instruction request and/or upon receiving an instruction and/or upon operating the access point: Switching the access enforcement point from an active mode into a sleep mode. The access enforcement point may be kept in a sleep mode during the time between two timings of sending the instruction request and/or receiving an instruction and/or causing operation of the access point, i.e. during the polling time interval, but e.g. not during terminal points in time of the polling time interval. The method may further comprise determining that an instruction request has to be send according to the polling time interval, and switching the access enforcement point into an active mode.

The sleep mode may be a mode, in which less energy is consumed by the access enforcement point as compared to the access enforcement point being in the active mode.

The active mode may be a mode in which the access enforcement point is able to/is configured to cause operation of the access point. The active mode may be a mode in which the access enforcement mode is able to/is configured to send an instruction request. The active mode may be a mode in which the access enforcement mode is able to/is configured to receive an instruction.

An access decision point may be configured to receive the instruction request send by the access enforcement point. The access decision point may be configured to receive a signal of/from an authentication medium, preferably a mobile device, of a user. The access decision method may be configured to determine an intent of the user to unlock the access point, e.g. upon receiving the signal of the authentication medium. The access decision point may be configured to generate the instruction dedicated to the access enforcement point, e.g. upon determining the intent of the user. The access decision point may be configured to send the instruction to the access enforcement point.

The authentication medium e.g. may be a mobile device or a physical keycard. Operating the access point may comprise unlocking and/or locking the access point. The authentication medium may be configured to send an instruction.

The authentication medium may be a token, a badge, a mobile device, the user's body or a part of a user's body, e.g., being suitable for biometric detection, or the like. In case if the authentication medium is a user's body or a part of a user's body, the access decision point may perform camera tracking in order to determine whether the user intends to unlock a respective access point. Further, the access decision point may perform biometric authentication in order to check whether a respective user is allowed to access a respective access point. Biometric authentication may include for example face recognition, iris recognition or the like.

E.g. if the authentication medium is a token, badge or mobile device, the communication between the access decision point and the authentication medium may be performed wirelessly. In particular, the communication may include ultra-wideband transmissions and/or Bluetooth transmissions.

It may be provided that generating a respective instruction including an unlock-command requires, for the determination of an intent, in particular in addition to the determination of an intent, determining the presence of a valid credential to unlock the respective access enforcement point, preferably wherein the credential e.g. may be obtained from the authentication medium by the access decision point.

The presence of a valid credential e.g. may be interpreted as a strong intent. Depending on the implementation of the present invention, an intent and/or a strong intent may be required.

It may be provided that the validity of the credential to unlock the respective access enforcement point is verified by a backend server with which the at least one access decision point may communicate.

It may be provided that the determination of an intent is performed using an UWB-tracking process, comprising: successively executing ultra-wideband transmissions between ultra-wideband transceiver(s) and the authentication medium, preferably the ultra-wideband transceiver(s) being part of the at least one access decision point; and determining successive positions of the authentication medium by processing signal properties of the ultra-wideband transmissions; determining a respective movement trajectory of the authentication medium based on the determined successive positions.

Alternatively or additionally, tracking via Received Signal Strength Indicator (RSSI) based on Bluetooth may be provided. In this case, determining successive positions of the authentication medium may be performed by processing successive RSSI values of an authentication medium. Thus, a respective movement trajectory of the authentication medium may be determined based on the successive positions.

It may be provided that the determination of an intent is performed using a camera-tracking process, comprising: determining, using at least one camera, successive positions of the user, preferably the at least one camera being part of the access decision point; and determining a respective movement trajectory of the user based on the determined successive positions.

The method may comprise correlating the movement trajectory of the authentication medium with the movement trajectory of the user; and associating the authentication medium with the user based on the correlation.

By correlating the movement trajectory of the authentication medium with the movement trajectory of the user and associating the authentication medium with the user based on the correlation, the user and the user's authentication medium may be matched such as being one entity. By that, it may be possible to avoid any confusion due to an authentication medium that is spaced apart from the user, e.g., in a luggage.

With respect to possible ultra-wideband applications, it is referred to the following patent applications: WO2019/224329A1; WO2021/219492A1; WO2022090159A1; WO2022/253949A1.

It may be provided that the determination of an intent is performed through user input into the authentication medium being a mobile device, wherein the mobile device transmits the user input to the at least one access decision point, and preferably wherein the user input includes a selection of the respective access enforcement point which the user intends to unlock.

The term access decision point may include any kind of access controller which is capable to decide whether an access point should be unlocked or not. It may be capable of determining an intent to unlock an access point. Further, it may be capable of checking the validity of a user's credential. An access decision point may comprise an integrated and/or spaced apart tracking system which is capable of tracking a position of a user's authentication medium. Examples for said tracking systems are camera tracking systems and/or ultra-wideband tracking systems. In case if the access decision point comprises an ultra-wideband tracking system, the ultra-wideband tracking system may include a plurality of ultra-wideband anchors facilitating ranging of the authentication medium, in particular to determine successive positions of the authentication medium. Thus, an access decision point according to the embodiments of the present invention may include an identification module which may be configured to verify a credential and/or an intent detection module which may for example track the user as described above, e.g. in order to determine the user's intent to access. The modules may be arranged spaced apart from each other and communicating with each other.

The access decision point may be connected to a power grid and/or may comprise a battery which is regularly to be replaced in order to prevent the access decision point from running out of energy. In a particular embodiment, the access decision point may be connected to a power grid and additionally comprise a battery in order to buffer potential blackouts in the power grid. An access control system then advantageously is capable of temporarily work during a blackout of a power grid.

The access decision point may be configured to communicate wirelessly with the access enforcement point. An access control system may include more than one access decision point and e.g. a plurality of access enforcement point. The number of access enforcement points comprised in the access control system may be larger than the number of access decision points comprised in the access control system.

Communication between the access enforcement point and the access decision point e.g. may be performed wirelessly via a low power communication protocol, such as Bluetooth Low Energy (BLE) or any other suitable low power communication protocols. The instruction polling/sending an instruction request by the access enforcement points therefore may be for example an advertising signal via Bluetooth.

The access decision point may be configured to determine an intent of the user, e.g. to determine an intent of the user upon receiving the signal of the authentication medium and/or e.g. upon receiving an instruction request. The access decision point may be configured to generate the instruction before receiving the instruction request, e.g. upon determining the intent of the user. The access decision point may be configured to send the instruction for a predetermined time period, e.g. at least 30 s, at least 1 min, at least 1.5 min, at least 2 min, or at least 5 min.

The access decision point may be connected to a power grid. Thus, sending instructions by the access decision point may not be energy-critical.

The access decision point may be configured to send an instruction comprising a no-action command, e.g. if no intent of a user is determined and/or no signal of an authentication medium of a user is received and/or no instruction request is received from an access decision point. Sending an instruction comprising a no-action command may comprise not sending any instruction, i.e. the access enforcement point may be configured to interpret an absence of a received instruction, e.g. after having sent an instruction request, as a no-action command/a no-action instruction.

The instruction may include a no-action command, e.g. if no intent of a user is determined and/or no signal of an authentication medium of a user is received and/or no instruction request is received from an access decision point.

A no-action command may be a signal which is sent from the access decision point to a respective access enforcement point, or may be the absence of a signal that may be interpreted as a no-action-command by the access enforcement point, e.g., if no signal is received for a predetermined time period. In other words, the method may be implemented such as the access decision point does not respond to a poll of a respective access enforcement point, e.g. if there is no detected intent, wherein the respective access enforcement point may interpret this non-responding as being a no-action commend, e.g. in particular after waiting for a response for a predetermined period of time.

The access decision method may be configured to determine an intent of the user to unlock and/or to lock the access point. The access decision point may be configured to generate the instruction dedicated to the access enforcement point, e.g. upon determining the intent of the user and/or e.g. upon receiving the instruction request.

The computer-implemented energy harvesting based access control method may be performed by an access control system. The access control system may include the access enforcement point, the access decision point, the access point and the energy harvesting means. The access control system may include more than one access decision point and e.g. a plurality of access enforcement point. The number of access enforcement points comprised in the access control system may be larger than the number of access decision points comprised in the access control system. Each access enforcement point may comprise energy harvesting means, may be configured to cause operation of an access point and may have an adjustable polling time interval that may be adjusted based on a status of the respective energy harvesting means.

Each access point may have an access enforcement point configured to cause operation of the respective access point.

Features described with respect to one access enforcement point may also apply to other access enforcement points of the plurality of access enforcement points, e.g. to each of the plurality of access enforcement points.

The polling time interval e.g. may be adjusted by the access enforcement point and/or the polling time interval may e.g. be adjusted by the access decision point.

The method may further comprise: Determining a status of the energy harvesting means, e.g. by the access enforcement point and/or by the access decision point.

Adjusting the polling time interval may comprise adjusting the polling time interval based on a signal of the solar cell and/or based on a level of energy stored in the energy storage. Preferably, the polling time interval may be adjusted based on ambient light incident on the solar cell.

Adjusting the polling time interval based on a level of energy stored in the energy storage may comprise: Decreasing the polling time interval at higher levels of energy stored in the energy storage and/or decreasing the polling time interval at lower levels of energy stored in the energy storage.

The polling time interval may be adjusted based on light, e.g. ambient light, incident on the solar cell, e.g. based on the amount of light/ambient light incident on the solar cell surface. The solar cell signal may be based on light incident on the solar cell, e.g. ambient light.

Adjusting the polling time interval may be based on commissioning the polling time interval depending on a solar cell signal and/or depending on a level of energy stored in the energy storage.

Ambient light may be light from indoor lighting and/or may be indoor light and/or may be sunlight, e.g. sunlight passing through windows in a building. Ambient light may be light from windows.

The solar cell signal may be a time dependent signal. The solar cell signal may be a photocurrent and/or a photocurrent density, e.g. generated by the solar cell. The solar cell signal may be a current and/or a current density, e.g. generated by the solar cell. The solar cell signal may be a voltage, e.g. a voltage output by the solar cell. The solar cell signal may be filtered and/or averaged, e.g. averaged for a predetermined amount of time using a moving average. The solar cell signal may be amplified, e.g. by the access enforcement point.

The access enforcement point may be electrically connected to the solar cell. The access enforcement point may be electrically connected to the energy storage, e.g. a battery. The energy storage may be electrically connected to the solar cell. The access enforcement point may be a low-power access enforcement point.

The access enforcement point may not be electrically connected to a power-grid. The access enforcement point may be electrically independent from a power-grid. The access decision point may be electrically connected to a power-grid.

The energy harvesting means and/or the energy storage may be adapted to provide an amount of energy to the access enforcement point that is sufficient to operate the access enforcement point. I.e., the energy harvesting means and/or the energy storage may be adapted to power the access enforcement point.

The solar cell may be configured to charge the energy storage, i.e. to transfer energy into the energy storage. The energy storage may be configured to power the access enforcement point in the absence of a solar cell signal, e.g. in the dark.

The solar cell may be an indoor solar cell. The area of the light-receiving surface of the solar cell may be less than 100 cm^2, or less than 50 cm^2. The area of the light-receiving surface of the solar cell may be smaller than the average palm of a human hand.

The access enforcement point may be configured to internally amplify the solar cell signal. The solar cell signal may be amplified, e.g. by the access enforcement point.

It may be provided that the access point is a postbox and/or a parcel box and/or a door and/or a lockable piece of furniture and/or an access restricted trigger mechanism. An access restricted trigger mechanism may be provided at an elevator, wherein unlocking the access restricted trigger mechanism causes the elevator to perform a predetermined action, e.g., moving to a specific floor or locking the elevator while keeping the elevator door open.

The polling time interval may be adjusted based on a level of energy stored in the energy storage exceeding a first energy storage threshold and/or dropping below a second energy storage threshold and/or changing by an energy storage changing threshold.

Adjusting the polling time interval may comprise: Adjusting the polling time interval based on a level of energy stored in the energy storage exceeding a first energy storage threshold and/or dropping below a second energy storage threshold and/or changing by an energy storage changing threshold.

The polling time interval may be adjusted based on a level of energy stored in the energy storage being above a first energy storage threshold and/or being below a second energy storage threshold and/or changing by an energy storage changing threshold.

The first energy storage threshold may be higher or equal to the second energy storage threshold.

A change of the level of stored energy being within a tolerance range, e.g. a change being lower than an energy storage changing threshold, may be disregarded for adjusting the polling time interval.

The polling time interval may be adjusted based on a signal of the solar cell exceeding a first solar cell threshold and/or dropping below a second solar cell threshold and/or based on the signal of the solar cell changing by a solar cell changing threshold or more. The first solar cell threshold and/or the second solar cell threshold and/or the solar cell changing threshold may be predetermined thresholds and/or may be based on a level of energy stored in the energy storage.

The polling time interval may be adjusted based on a signal of the solar cell being above a first solar cell threshold and/or being below a second solar cell threshold.

The first solar cell threshold may be higher or equal to the second solar cell threshold.

The first solar cell threshold, the second solar cell threshold and the solar cell changing threshold may be predetermined thresholds, e.g. absolute and/or relative, e.g. in relation to a moving average of a solar cell signal.

A change of the solar cell signal within a tolerance range, e.g. a change being lower than a changing threshold, may be disregarded for adjusting the polling time interval. The tolerance range/the changing threshold may be defined such that people moving near the access enforcement point causing a change of the amount of incident light may be disregarded, i.e., do not cause an adjustment of the polling time interval.

Using thresholds, e.g. relating to the solar cell signal and/or to the level of energy stored in the energy storage, may allow for a robust and simple adjustment of the polling time interval.

Thresholds referring to the solar cell signal may be calibrated during operation of the solar cell. E.g., the thresholds may be calibrated individually for each solar cell. Common thresholds for a plurality of solar cells that are calibrated based on the plurality of the solar cells may also be used. Calibration may be done under typical operating conditions, i.e. when the solar cell is at the typical location of operation, and under typical ambient light conditions.

Thresholds referring to the solar cell signal may be based on design values provided by the manufacturer of the solar cell.

Thresholds referring to the solar cell signal may be based on fractions of averaged solar cell signals. The term fraction may refer to factors of solar cell signals, wherein the factors may be smaller than one, e.g. 75 % or less, 50 % or less, 25 % or less, or 10% or less.

Thresholds referring to the solar cell signal may be based on multiples of averaged solar cell signals, wherein the multiples may be larger than 1, e.g. 1.25 or more, 1.5 or more, 2 or more, 3 or more, or 5 or more.

Thresholds referring to the solar cell signal may be based on averaged solar cell signals which are averaged over a predetermined amount of time, e.g. 1 min or less, 2 min or less, 5 min or less, 10 min or less, or 24 h or less, e.g. in the typical location of the solar cell, e.g. under typical ambient light conditions.

The polling time interval may be decreased when a signal of the solar cell increases and/or the polling time interval may be increased when a signal of the solar cell decreases. The polling time interval may be adjusted, e.g. increased and/or decreased, such that a level of energy stored in the energy storage may be kept within a predetermined range, e.g. the level of energy stored in the energy storage may be kept constant.

Adjusting the polling time interval based on a signal of the solar cell may comprise decreasing the polling time interval when a signal of the solar cell increases and/or increasing the polling time interval be when a signal of the solar cell decreases. The polling time interval preferably may be increased or decreased such that a level of energy stored in the energy storage is kept within a predetermined range.

The polling time interval may be increased or decreased such that a level of energy stored in the energy storage is kept within a predetermined range during operation of the access enforcement point, e.g. the level of energy stored in the energy storage may be kept constant. Keeping the level constant may comprise keeping the level constant within an acceptance range around a set a value, e.g. within 5% deviation of the set value.

For example, the inverse polling time interval, i.e. the polling time frequency, may be increased linearly according to an increase of the solar cell signal, e.g. if the solar cell signal is above a pre-determined threshold. For example, the inverse polling time interval may be decreased linearly according to a decrease of the solar cell signal, e.g. if the solar cell signal is above a pre-determined threshold. The energy consumption of the instruction polling may generally depend linearly on the inverse polling time interval. Adjusting the polling time such that the inverse polling time interval is adjusted linearly according to an increase/decrease of the solar cell signal may thus allow to increase/decrease the energy consumption according to the energy generated by the solar cell, i.e. it may allow to keep the level of energy stored in the energy storage within a predetermined range. Keeping the stored energy within the predetermined range may allow to allow for a robust operation of the access enforcement point, i.e. it may allow to decrease the risk of the access enforcement point running out of energy and being inoperable.

Increasing or decreasing the polling time interval such that a level of energy stored in the energy storage is kept within a predetermined range may include using a controller, e.g. a PI- or PID-controller. The controller may adjust the polling time interval according to the level of energy stored in the energy storage.

The polling time interval may be adjusted based on the access enforcement point causing operation of the access point. The polling time interval may be adjusted based on a second access enforcement point causing operation of a second access point. The second access enforcement point may be configured to perform instruction-polling including repeatedly sending an instruction request according to a second polling time interval. The second access enforcement point may be configured to receive an instruction. The second access enforcement point may be configured to cause operation of the second access point according to the received instruction.

The polling time interval may be adjusted based on the access enforcement point receiving an instruction, e.g. an instruction to cause unlocking and/or locking of the access point. The polling time interval may be adjusted based on the access enforcement point receiving a no-action command.

The polling time interval may be adjusted based on a prediction whether an intent to unlock is expected and/or prediction of a frequency of intended access operations and/or depending on a time and/or depending on a day.

The received instruction may include a command to adjust the polling time interval by the access enforcement point. The access enforcement point may adjust the polling time interval based on receiving the instruction, e.g. independent of the content of the instruction and/or without the instruction comprising a command to adjust the polling time interval, e.g. without the instruction comprising an explicit command to adjust the polling time interval.

It may be unlikely that an access point is operated twice within short time intervals, e.g. within a few seconds and/or minutes, e.g. during the night. For example, during night times it may be possible that only a security guard may pass an access point once every hour or every two hours. Thus, adjusting the polling time interval, e.g. increasing the polling time interval, based on the access enforcement point causing operation of the access point may allow for a more energy-efficient access control method.

The polling time interval may be adjusted, e.g. may be increased, based on the access enforcement point receiving an instruction, e.g. an instruction to cause unlocking and/or locking of the access point. The polling time interval may be adjusted, e.g. may be decreased, based on the access enforcement point receiving a no-action command.

The polling time interval may be adjusted, e.g. may be decreased, based on the second access enforcement point receiving an instruction, e.g. an instruction to cause unlocking and/or locking of the access point. Then, it may be likely that a user soon intends to operate the first access enforcement point. The polling time interval may be adjusted, e.g. may be increased, based on the second access enforcement point receiving a no-action command. Then, it may be less likely that a user soon intends to operate the first access enforcement point. The term "first access enforcement point" refers to the access enforcement point that is not the second access enforcement point. The second access enforcement point may be located in a vicinity of the first access enforcement point.

The polling time interval e.g. may be adjusted by the access enforcement point. The polling time interval may e.g. be adjusted by the access decision point. The polling time interval of the first access enforcement point may e.g. be adjusted by the access decision point, e.g. based on the second access enforcement point causing operation of the second access point. The polling time interval of the first access enforcement point may e.g. be adjusted by the access decision point, e.g. based on any neighboring access enforcement point causing operation of a respective neighboring access point. The polling time interval of the first access enforcement point may e.g. be adjusted based on any neighboring access enforcement point, e.g. causing operation of a respective neighboring access point.

The polling time interval may be set to infinity when a level of energy stored in the energy storage is lower than a pause threshold. The pause threshold preferably may be at least a total amount of energy required by the access enforcement point to perform the following actions: sending the instruction request for a predetermined integer number of times, e.g. according to the polling time interval, and/or receiving the instruction for the predetermined integer number of times, and/or adjusting the polling time interval for the predetermined integer number of times, and/or causing operation of the access point according to the instruction once or for the predetermined integer number of times. The predetermined integer number may be 1, or 2, or 3, or 4, or 5.

The polling time interval may be set to infinity in response to a level of energy stored in the energy storage being lower than a pause threshold.

The polling time interval may be set to more than 1 min, or more than 5 min, or more than 10 min, or more than 30 min, or more than 1 hour, or to infinity, e.g. when a level of energy stored in the energy storage is lower than a pause threshold and/or when the level of energy stored in the energy storage drops below the pause threshold. The pause threshold may be 100% or less, or 125 % or less, or 150% or less, or 200% or less, of the total amount of energy required by the access enforcement point to perform the actions of sending the instruction request for a predetermined integer number of times, and/or receiving the instruction for the predetermined integer number of times, and/or adjusting the polling time interval for the predetermined integer number of times, and/or causing operation of the access point once or for the predetermined integer number of times according to the instruction.

The pause threshold may relate to a minimum amount of energy stored in the energy storage threshold that is required for the access enforcement point to be able to perform the essential operations.

When the polling time interval is set/adjusted in response to a level of energy stored in the energy storage being lower than a pause threshold, extraordinary polling may still be possible. In some embodiments, extraordinary polling may be the only instruction polling/the only sending of instruction requests being possible, when the level of energy stored in the energy storage is lower than the pause threshold. In other words: In some embodiments, the access enforcement point is configured to only perform extraordinary instruction polling/extraordinary sending of instructions requests, when the level of energy stored in the energy storage is lower than the pause threshold.

The method may further comprise performing an extraordinary polling by the access enforcement point at an extraordinary polling timing. The extraordinary polling timing may be set based on a pre-determined pattern of a signal of the solar cell and/or based on a pre-determined pattern of a level of energy stored in the energy storage. The extraordinary polling may include sending a single instruction request by the access enforcement point.

The extraordinary polling timing may be set based on determining that the solar cell signal corresponds to a pre-determined pattern of a signal of the solar cell and/or based on determining that the level of energy stored in the energy storage corresponds to a pre-determined pattern of the level of energy stored in the energy storage.

The extraordinary polling timing e.g. may be set based on determining a predetermined drop of the solar cell signal that may correspond to a reduction of ambient light incident on the solar cell that may occur upon manually masking the solar cell. The solar cell may be masked partially or fully, e.g. the fingers of a hand masking the solar cell may be spread. The solar cell e.g. may be masked by means of a keycard. The predetermined drop may be a drop by a predetermined extent that e.g. may occur during a predetermined time range. The predetermined drop may be a relative drop or an absolute drop. The predetermined drop may e.g. be a drop by 50% of the solar cell signal e.g. occurring within 10s. The predetermined drop may be a drop below a predetermined threshold that e.g. may occur during a predetermined time range.

The extraordinary polling timing e.g. may be set based on a predetermined increase of the solar cell signal that may e.g. occur upon deliberately irradiating the solar cell by a light source.

The extraordinary polling may be triggered, e.g. based on the signal of the solar cell and/or based on the level of the energy storage. The extraordinary polling e.g. may be triggered by determining that the solar cell signal corresponds to a predetermined pattern, e.g. a drop of the solar cell signal.

The extraordinary polling timing may be set in response to the solar cell signal dropping below a predetermined threshold.

The extraordinary polling timing may be a timing independent from the polling time interval. The extraordinary polling timing may be a timing not corresponding to the polling time interval.

The extraordinary polling e.g. may be triggered by a wakeup-pattern of the solar cell signal. The predetermined pattern, e.g. the drop of the solar cell signal, e.g. may be a wakeup-pattern.

The access enforcement point may comprise a wakeup sensor which may be used by a user in order to cause the access enforcement point to, preferably immediately, switch from a sleep mode into an active mode. The solar cell may be used/may be configured as a wakeup sensor, in particular wherein the user may cover the solar cell, e.g., by his hand or body, causing a sudden drop in the amount of incident light which may be interpreted as a wakeup signal.

The method may further comprise charging the energy storage, using the solar cell, wherein the solar cell may be deliberately irradiated by a user using a light source. The extraordinary polling timing may be set in response to the charging, more preferably in response to the signal of the solar cell exceeding an extraordinary polling threshold and/or in response to the level of energy stored in the energy storage exceeding an extraordinary polling threshold.

Charging the energy storage may comprise/may be understood as transferring energy to the energy storage. The method may comprise charging the energy storage by deliberately irradiating the solar cell, e.g. by a user, using a light source, e.g. an external light source.

The extraordinary polling timing may be set in response to the charging, more preferably in response to the signal of the solar cell being above an extraordinary polling threshold and/or in response to the level of energy stored in the energy storage being above an extraordinary polling threshold.

The extraordinary polling threshold of the solar cell signal may be a predetermined threshold. The extraordinary polling threshold may be an absolute threshold and/or a relative threshold, e.g. relative to a solar cell signal at a time before the solar cell signal exceeds the extraordinary polling threshold and/or relative to a moving average of the solar cell signal. E.g., the extraordinary polling threshold may correspond to 120% or more of the moving average of the solar cell signal over the past 10 s or less, past 30 s or less, past 1 min or less, or 150% or more, or 200% or more.

The extraordinary polling threshold of the energy storage level may be 100% or less, or 125 % or less, or 150% or less, or 200% or less, of the total amount of energy required by the access enforcement point to perform the actions of sending the instruction request, e.g. according to the polling time interval, for a predetermined integer number of times, and/or receiving the instruction for the predetermined integer number of times, and/or adjusting the polling time interval for the predetermined integer number of times, and/or causing operation of the access point once or for the predetermined integer number of times according to the instruction. The predetermined integer number e.g. may be 1, or 2, or 3, or 4, or 5.

The extraordinary polling threshold of the energy storage level may be the pause threshold.

The extraordinary polling threshold of the energy storage level may prevent instruction polling/sending an instruction request when there is not enough energy in the energy storage to perform desired actions by the access enforcement point.

The extraordinary polling threshold of the solar cell signal may allow to determine that the energy storage of the access enforcement point is deliberately charged.

The extraordinary polling threshold of the solar cell signal and/or of the level of energy stored in the energy storage may allow to operate/to use an access enforcement point even when the energy storage of the access enforcement point is empty or nearly empty.

According to a second aspect of the present invention, a use of an access enforcement point in a computer-implemented energy harvesting based access control method according to the first aspect of the present invention may be provided. The access enforcement point may comprise energy harvesting means including an energy storage and a solar cell. The access enforcement point may comprise a communication interface, preferably for communicating with an access decision point. The access enforcement point may comprise means for causing operation of an access point. The access enforcement point may comprise processing means for setting and/or adjusting a polling time interval based on a status of the energy harvesting means.

Use of the access enforcement point may comprise determining a status of the energy harvesting means. Use of the access enforcement point may comprise determining a polling time interval, e.g. a desired polling time interval, based on a status of the energy harvesting means. Use of the access enforcement point may comprise adjusting/determining/setting a polling time interval according to embodiments of the first aspect of the present invention.

The access enforcement point may be configured to send an instruction request. The access enforcement point may be configured to perform instruction polling, e.g. including repeatedly sending an instruction request by the access enforcement point according to a polling time interval. The access enforcement point may be configured to receive an instruction.

The communication interface of the access enforcement point may be configured to send an instruction request. The communication interface of the access enforcement point may be configured to perform instruction polling, e.g. including repeatedly sending an instruction request by the communication interface of the access enforcement point according to a polling time interval. The communication interface of the access enforcement point may be configured to receive an instruction.

According to a third aspect of the present invention, an access enforcement point may be provided. The access enforcement point may comprise energy harvesting means including an energy storage and a solar cell. The access enforcement point may be adapted to send an instruction request. The access enforcement point may be adapted to perform instruction polling, e.g. comprising repeatedly sending an instruction request according to a polling time interval. The access enforcement point may be adapted to receive an instruction. The access enforcement point may be adapted to set and/or adjust the polling time interval based on a status of the energy harvesting means. The access enforcement point may be adapted to cause operation of an access point. Preferably, the access enforcement point may be configured/adapted to be used in a computer-implemented energy harvesting based access control method according to the first aspect of the present invention.

The access enforcement point may comprise processing means for determining a status of the energy harvesting means. The access enforcement point may comprise processing means for determining a polling time interval, e.g. a desired polling time interval, based on a status of the energy harvesting means. The access enforcement point may comprise processing means for adjusting/determining/setting a polling time interval according to embodiments of the first aspect of the present invention.

According to a fourth aspect of the present invention, an access control system may be provided. The access control system may comprise at least one access enforcement point and at least one access point. One of the at least one access enforcement points may comprise energy harvesting means including a solar cell and an energy storage. The system may be configured to perform a computer-implemented energy harvesting based access control method according to the first aspect of the present invention.

The access control system may include an access decision point. The access control system may include one or more/more than one access decision points and e.g. a plurality of access enforcement point. The number of access enforcement points comprised in the access control system may be larger than the number of access decision points comprised in the access control system. Each access enforcement point may comprise energy harvesting means, may be configured to cause operation of an access point and may have an adjustable polling time interval that may be adjusted based on a status of the respective energy harvesting means.

According to a fifth aspect of the present invention, a computer program comprising computer-readable instructions which when executed by a data processing system cause the data processing system to perform the computer-implemented energy harvesting based access control method according to the first aspect of the present invention.

According to a sixth aspect of the present invention, a use of a convolutional neural network for adjusting a polling time interval of an access enforcement point according to the third aspect of the present invention may be provided. The convolutional neural network preferably may be trained based on simulated and/or measured data. The simulated and/or measured data more preferably may include polling time intervals of an access enforcement point according to the third aspect of the present invention and statuses of an energy harvesting means of an access enforcement point according to the third aspect of the present invention.

The simulated and/or measured data may e.g. include 24h-courses of polling intervals, i.e. polling intervals over the course of 24 hours.

The above-described adjustment of the polling time interval may be performed based on a machine-learning model. The machine-learning model may in particular dynamically adjust the time interval ad/or dynamically adjust the criteria which are considered for the adjustment. Historic data captured during operation of a corresponding access control system, may be used as training data for such machine-learning model. The machine-learning model may include a Convolutional Neural Network (CNN). Unsupervised machine-learning techniques may be used advantageously.

All technical implementation details and advantages described with respect to the first aspect of the present invention are self-evidently mutatis mutandis applicable for the second, third, fourth, fifth and sixth aspects of the present invention and vice versa.

The terms "plurality" and "more than one" may be used interchangeably unless otherwise specified. The terms "locking/unlocking" and "operation/operating" may be used interchangeably unless otherwise specified. The terms "at least one" and "one or more" include the term "plurality". The terms "plurality" and "more than one" may be used interchangeably unless otherwise specified.

### BRIEF DESCRIPTION OF THE DRAWINGS

The present invention will be explained in more detail, by way of example, with reference to the drawings in which:
- Figure 1: is a highly schematic perspective view of an access enforcement point and a user according to embodiments of the present invention.
- Figure 2: is a high-level flow chart diagram illustrating a sequence of an energy harvesting based access control method according to embodiments of the present invention.
- Figure 3A: is an illustrative example of a polling time interval over time that is adjusted based on a signal of the solar cell.
- Figure 3B: is an illustrative example of a polling time interval over time that is adjusted based on a level of energy stored in the energy storage.
- Figure 4: is a schematic perspective view of a building comprising an access control system comprising access enforcement points that implement an energy harvesting based access according to embodiments of the present invention.
- Figure 5: is a flow chart diagram illustrating a sequence of an energy harvesting based access control method comprising an access control system implementing an energy harvesting based access control method according to embodiments of the present invention.

### FIGURATIVE DESCRIPTION OF EMBODIMENTS

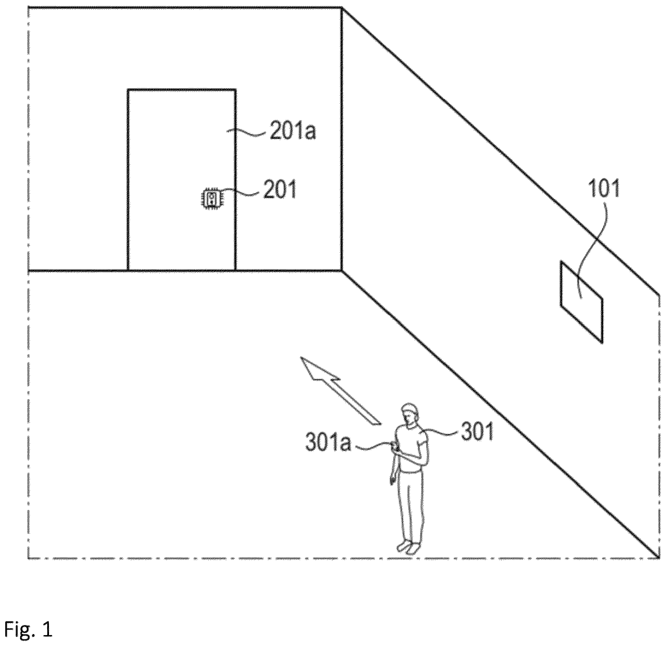

Figure 1 is a highly schematic perspective view of an access enforcement point and a user according to embodiments of the present invention. The access enforcement point 201 is configured to cause operation of the access point 201a. The access enforcement point 201 comprises energy harvesting means including a solar cell (not shown) and an energy storage (not shown), e.g. a battery. The access enforcement point 201 is configured to adjust the polling time interval based on a status of the energy harvesting means.

The user 301 has an authentication medium 301a which may carry a valid credential for the access point 201a. The authentication medium 301a may send a signal to the access decision point 101. The access decision point 101 may detect an intent of the user 301 to access the access point 201a. For example, the intent detection may be carried out based on successive positions or a moving direction and/or speed of the authentication medium 301a. Alternatively, the intent may be detected based on the validity of the credential. This scenario set forward, the following will happen: The next time the access decision point 101 receives an instruction polling signal from the access enforcement point 201, it may respond an unlock-command causing the access enforcement point 201 to unlock the access point 201a such that the user 301 can access the access point 201a.

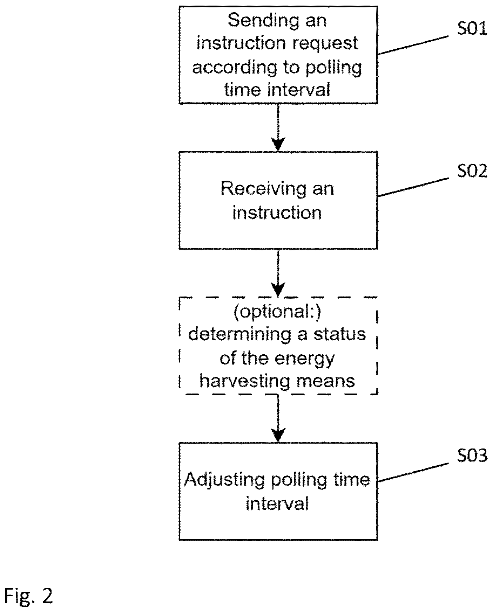

Figure 2 is a high-level flow chart diagram illustrating a first sequence of an energy harvesting based access control method according to embodiments of the present invention. The method includes step S01 of sending an instruction request according to a polling interval, i.e. the method includes instruction polling. The method includes step S02 of receiving an instruction. The method includes step S03 of adjusting the polling time interval. The method may include the optional step of determining a status of the energy harvesting means.

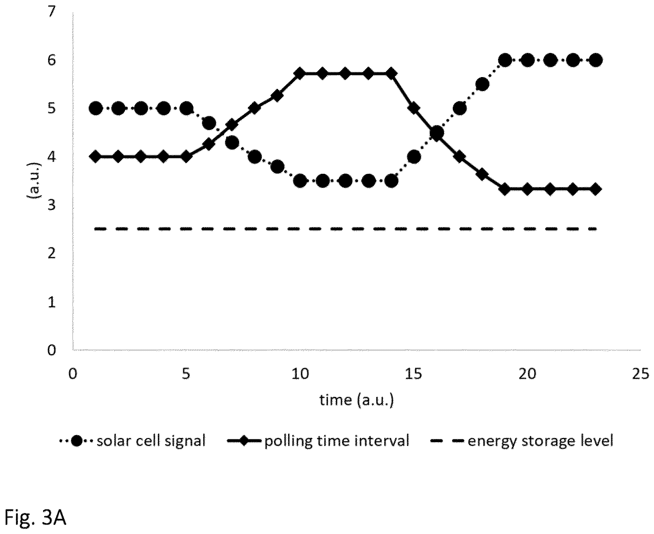

Figure 3A is an illustrative example of a polling time interval over time that is adjusted based on a signal of the solar cell. The polling time interval is increased when the signal of the solar cell decreases. The polling time interval is adjusted such that a level of energy stored in the energy storage is kept within a predetermined range, i.e. such that the level of energy stored in the energy storage is kept constant. The polling time interval is indicated by the tilted filled squares and the solid line. The solar cell signal is indicated by the filled circles and the dotted line. The level of energy stored in the energy storage is indicated by the dashed line.

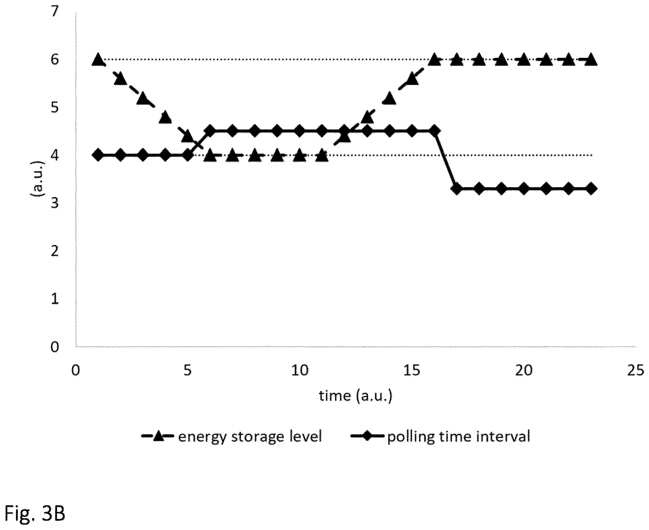

Figure 3B is an illustrative example of a polling time interval over time that is adjusted based on a level of energy stored in the energy storage. In figure 3B, the polling time interval is adjusted such that the level of energy stored in the energy storage is kept within a predetermined range. The predetermined range is indicated by the two dotted lines. The polling time interval is indicated by the tilted filled squares and the solid line. The level of energy stored in the energy storage is indicated by the filled triangles and the dashed line. The polling time interval may be increased when the level of energy stored in the energy storage drops and/or when the level of energy stored in the energy storage is close to a lower limit of the predetermined range, e.g. a second energy storage threshold, and/or when the level of energy stored in the energy storage drops below a lower limit of the predetermined range, e.g. a second energy storage threshold. Vice versa, the polling time interval may be decreased when the level of energy stored in the energy storage increases and/or when the level of energy stored in the energy storage is close to an upper limit of the predetermined range, e.g. a first energy storage threshold, and/or when the level of energy stored in the energy storage exceeds an upper limit of the predetermined range, e.g. a first energy storage threshold.

In figure 3B, the energy storage level increases starting from time 12. For example, this may be related to a higher amount of ambient light incident on the solar cell, as compared to before time 12, which may cause a higher signal of the solar cell, e.g. a higher amount of energy generated by the solar cell per time interval. This may however not immediately cause an adjustment of the polling time interval, since e.g. the energy storage level may increase but still be within the predetermined range. Once the energy storage level increase above the first energy threshold indicated by the dotted line, the polling time interval may be adjusted, e.g. it may be decreased. Adjusting the polling time interval such that a level of energy stored in the energy storage level is kept in a predetermined range allows to reduce the number of adjustments of polling time intervals as compared to adjusting the polling time interval solely based on the signal of the solar cell, but still allowing to keep the energy level stored in the energy storage within a predetermined range, e.g. substantially constant. This may provide a particularly robust method for adjusting the polling time interval.

In figures 3A and 3B, the units of the polling time signal, of the solar cell signal, of the time and of the energy storage level/the level of energy stored in the energy storage are arbitrary units (a.u.) respectively, and may e.g. be linear units or logarithmic units.

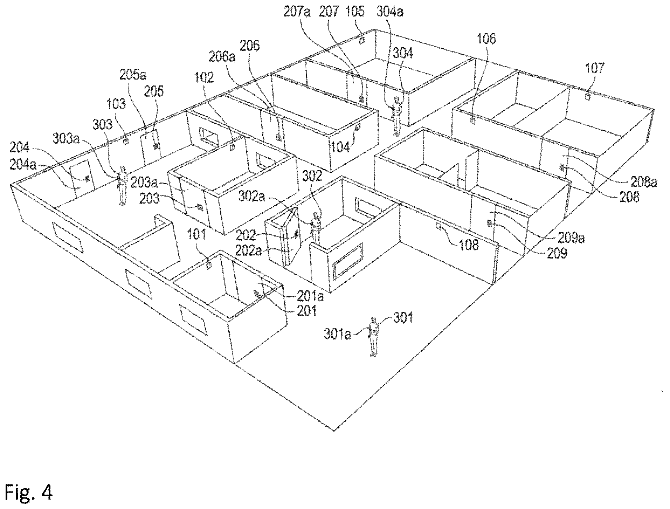

Figure 4 is a schematic perspective view of a building comprising an access control system comprising access enforcement points that may implement an energy harvesting based access control method according to embodiments of the present invention.

In the description of figure 4, the reference signs 101, 102, 103, 104, 105, 106, 107, 108 are abbreviated as 101, ..., 108; the reference signs 201, 202, 203, 204, 205, 206, 207, 208, 209, 210, 211, 212 are abbreviated as 201, ..., 212; the reference signs 201a, 202a, 203a, 204a, 205a, 206a, 207a, 208a, 209a, 210a, 211a, 212a are abbreviated as 201a, ..., 212a; the reference signs 301, 302, 303, 304 are abbreviated as 301, ..., 304; and the reference signs 301a, 302a, 303a, 304a are abbreviated as 301a, ..., 304a.

The building comprises a plurality of access points 201a, ..., 212a. Each access point 201a, ..., 212a has a respective access enforcement point 201, ..., 212 which includes, in the illustrated example of figure 4, an actuator in the door leaf which is capable to unlock and/or lock the access point 201a, ..., 212a. Further, the building is equipped with a plurality of access decision points 101, ..., 108 which are distributed throughout the building. The access enforcement points 201, ..., 212 may perform instruction polling (S01) including repeatedly sending an instruction request to the access decision points 101, ..., 108 according to respective polling time intervals. The instruction requests may be received by at least part of the access decision points 101, ..., 108, e.g., by the access decision points 101, ..., 108 which are in wireless communication range of a respective access enforcement point 201, .., 212.

As it is depicted in figure 4, a plurality of users 301, ..., 304 are in and near the building. Each user 301, ..., 304 has a respective authentication medium 301a, ..., 304a. The authentication mediums 301a, ..., 304a, according to the illustration of figure 4, are mobile devices capable of communicating wirelessly. If one access decision point 101, ..., 108 receives a signal from an authentication medium 301a, ..., 304a of a user 301, ..., 304, which may be a mobile device, and determines an intent of the user 301, ..., 304 to unlock a respective access enforcement point 201, ..., 212, the access decision point 101, ..., 108 may generate an instruction and may send it to the respective access enforcement point 201, ..., 212, e.g. in response to receiving an instruction request from the respective access enforcement point 201, ..., 212 and/or in response to the instruction polling. In some embodiments, generating the instruction may be only performed, if in addition to the intent, a valid credential is successfully validated by the access decision point 201, ..., 212. The respective instruction may include an unlock-command causing the respective access enforcement point 201, ..., 212 to unlock. Hence, the user 301, ..., 304 may be able to access the respective access point 201a, ..., 212a. If no intent to unlock or no valid credential is received/determined by the access decision point 201, ..., 212, the instruction may be a no-action command. The no-action command may be also seen in undertaking no action, i.e., not responding at all.

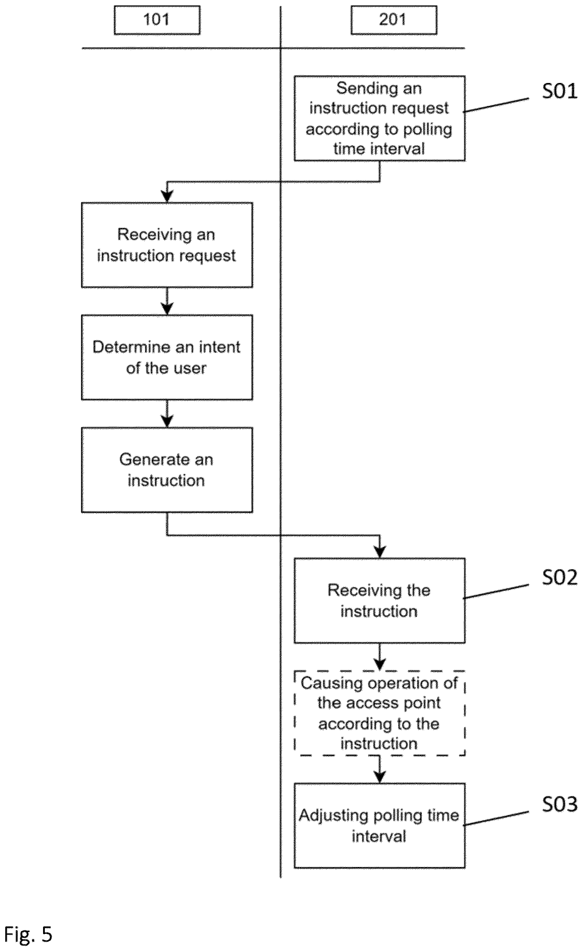

Figure 5 is a high-level swim lane diagram of the energy harvesting based access control method according to embodiments of the present invention. Actions that may be performed by the access enforcement point 201, e.g. S01 sending an instruction request according to a polling time interval, S02 receiving the instruction, optionally causing operation of the access point 201a, and S03 adjusting the polling time interval, are shown on the right. On the left, actions that may be performed by the access decision point 101 are shown, e.g. receiving an instruction request, determining an intent of the user, and generating an instruction. The instruction may include a no-action command. In case of a no-action command, in some embodiments the access decision point may not respond to the instruction request. Alternatively, an instruction comprising a no-action command may be sent to the access enforcement point 201 in response to the instruction polling.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 101, ..., 108: access decision point
- 201, ..., 212: access enforcement point
- 201a, ..., 212a: access point
- 301, ..., 304: user
- 301a, ..., 304a: authentication medium
- S01: instruction-polling/sending an instruction request
- S02: receiving an instruction
- S03: adjusting a polling time interval

## Claims

1. A computer-implemented energy harvesting based access control method, comprising:
instruction-polling (S01), by an access enforcement point (201), wherein instruction-polling (S01) includes repeatedly sending, by the access enforcement point (201), an instruction request according to a polling time interval, and
receiving (S02), by the access enforcement point (201), an instruction,
wherein the instruction includes an unlock-command to cause unlocking of an access point (201a),
wherein the access enforcement point (201) is configured to cause operation of the access point (201a) according to the instruction,
wherein the access enforcement point (201) comprises energy harvesting means including a solar cell and an energy storage,
wherein the method further comprises: adjusting (S03) the polling time interval based on a status of the energy harvesting means.

2. The computer-implemented energy harvesting based access control method according to claim 1,
wherein an access decision point (101) is configured to:
receive the instruction request send by the access enforcement point (201),
receive a signal of an authentication medium (301a), preferably a mobile device, of a user (301),
determine an intent of the user (301) to unlock the access point (201a), upon receiving the signal of the authentication medium (301a),
generate the instruction dedicated to the access enforcement point (201), upon determining the intent of the user (301), and
send the instruction to the access enforcement point (201).

3. The computer-implemented energy harvesting based access control method according to claim 1 or claim 2,
wherein adjusting (S03) the polling time interval comprises: adjusting the polling time interval based on a signal of the solar cell and/or based on a level of energy stored in the energy storage,
wherein preferably, the polling time interval is adjusted based on ambient light incident on the solar cell.

4. The computer-implemented energy harvesting based access control method according to any of claims 1 to 3,
wherein the polling time interval is adjusted based on a level of energy stored in the energy storage exceeding a first energy storage threshold and/or dropping below a second energy storage threshold and/or changing by an energy storage changing threshold.

5. The computer-implemented energy harvesting based access control method according to any of claims 1 to 4,
wherein the polling time interval is adjusted based on a signal of the solar cell exceeding a first solar cell threshold and/or dropping below a second solar cell threshold and/or based on the signal of the solar cell changing by a solar cell changing threshold or more;
wherein the first and second solar cell thresholds and the solar cell changing threshold are predetermined thresholds and/or based on a level of energy stored in the energy storage.

6. The computer-implemented energy harvesting based access control method according to any of claims 1 to 5,
wherein the polling time interval is decreased when a signal of the solar cell increases and/or wherein the polling time interval is increased when a signal of the solar cell decreases,
wherein the polling time interval preferably is adjusted such that a level of energy stored in the energy storage is kept within a predetermined range.

7. The computer-implemented energy harvesting based access control method according to any of claims 1 to 6,
wherein the polling time interval is adjusted based on the access enforcement point (201) causing operation of the access point (201a); and/or
wherein the polling time interval is adjusted based on a second access enforcement point causing operation of a second access point and wherein the second access enforcement point is configured to:
• perform instruction-polling (S01) including repeatedly sending an instruction request according to a second polling time interval,
• receive (S02) an instruction, and
• cause operation of the second access point according to the received instruction.

8. The computer-implemented energy harvesting based access control method according to any of claims 1 to 7, wherein the polling time interval is set to infinity when a level of energy stored in the energy storage is lower than a pause threshold,
wherein the pause threshold preferably is at least a total amount of energy required by the access enforcement point (201) to perform the following actions:
• sending (S01) the instruction request according to the polling time interval for a predetermined integer number of times,
• receiving (S02) the instruction for the predetermined integer number of times,
• adjusting (S03) the polling time interval for the predetermined integer number of times, and
• causing operation of the access point (201a) according to the instruction once or for the predetermined integer number of times;
wherein the predetermined integer number is 1, preferably 2, more preferably 3.

9. The computer-implemented energy harvesting based access control method according to any of claims 1 to 8, wherein the method further comprises:
performing an extraordinary polling by the access enforcement point (201) at an extraordinary polling timing,
wherein the extraordinary polling timing is set based on a pre-determined pattern of a signal of the solar cell and/or based on a pre-determined pattern of a level of energy stored in the energy storage,
wherein the extraordinary polling includes sending a single instruction request by the access enforcement point (201).

10. The computer-implemented energy harvesting based access control method according to any of claims 1 to 9, wherein the method further comprises: charging the energy storage, using the solar cell, wherein the solar cell is deliberately irradiated by a user (301) using a light source,
preferably depending on claim 9 and wherein the extraordinary polling timing is set in response to the charging, more preferably in response to the signal of the solar cell exceeding an extraordinary polling threshold and/or in response to the level of energy stored in the energy storage exceeding an extraordinary polling threshold.

11. Use of an access enforcement point (201) in a computer-implemented energy harvesting based access control method according to any of claims 1 to 10, the access enforcement point (201) comprising:
energy harvesting means including an energy storage and a solar cell;
a communication interface, preferably for communicating with an access decision point (101);
means for causing operation of an access point (201a); and
processing means for adjusting (S03) a polling time interval based on a status of the energy harvesting means.

12. An access enforcement point (201),
wherein the access enforcement point (201) comprises energy harvesting means including an energy storage and a solar cell,
wherein the access enforcement point (201) is adapted to perform the following actions:
• repeatedly sending (S01) an instruction request according to a polling time interval,
• receiving (S02) an instruction, and
• adjusting (S03) the polling time interval based on a status of the energy harvesting means,
• causing operation of an access point (201a),
wherein preferably, the access enforcement point (201) is configured to be used in a computer-implemented energy harvesting based access control method according to any of claims 1 to 10.

13. An access control system, comprising:
at least one access enforcement point (201),
at least one access point (201a),
wherein one of the at least one access enforcement point (201) comprises energy harvesting means including a solar cell and an energy storage,
wherein the system is configured to perform a computer-implemented energy harvesting based access control method according to any of claims 1 to 10.

14. A computer program comprising computer-readable instructions which when executed by a data processing system cause the data processing system to perform the computer-implemented energy harvesting based access control method according to any of claims 1 to 10.

15. Use of a convolutional neural network for adjusting (S03) a polling time interval of an access enforcement point (201) according to claim 12,
wherein the convolutional neural network preferably is trained based on simulated and/or measured data,
wherein the simulated and/or measured data more preferably include polling time intervals of an access enforcement point (201) according to claim 12 and statuses of an energy harvesting means of an access enforcement point (201) according to claim 12.
